# NEUE EUROPÄISCHE PATENTSCHRIFT

(11) **EP 2 117 854 B2**
(45) Veröffentlichungstag und Bekanntmachung des Hinweises auf die Entscheidung über den Einspruch: **11.01.2017**
(45) Hinweis auf die Patenterteilung: 04.05.2011
(21) Anmeldenummer: 08707596.6
(22) Anmeldetag: 07.02.2008
(51) Int. Cl.: B60G 17/052

(54) **PNEUMATISCHE SCHALTVENTILEINRICHTUNG FÜR LUFTGEFEDERTE FAHRZEUGE MIT MECHANISCHER RÜCKSTELLUNG DES BEDIENELEMENTS**
PNEUMATIC CONTROL VALVE DEVICE FOR AIR-SUSPENDED VEHICLES, WITH MECHANICAL RETURN OF THE CONTROL ELEMENT
DISPOSITIF SOUPAPE DE COMMANDE PNEUMATIQUE POUR VÉHICULES À SUSPENSION PNEUMATIQUE, À RETOUR MÉCANIQUE DE L'ÉLÉMENT DE COMMANDE

(30) Priorität: 07.02.2007 DE 102007005979
(43) Veröffentlichungstag der Anmeldung: 18.11.2009
(73) Patentinhaber: KNORR-BREMSE Systeme für Nutzfahrzeuge GmbH, 80809 München (DE)
(72) Erfinder: HERGES, Michael, 80935 München (DE); MEDERER, Martin, 80797 München (DE); RÖTHER, Friedbert, 74389 Cleebronn (DE); TOTH, Janos, H-6000 Kecskemét (HU)
(74) Vertreter: Wiedemann, Markus
(86) Internationale Anmeldenummer: PCT/EP2008/000938
(87) Internationale Veröffentlichungsnummer: WO 2008/095704

(56) Entgegenhaltungen:
- DE-A1- 2 363 836
- DE-A1- 4 143 296
- DE-A1-102006 006 439
- DE-C1- 4 120 824
- DE-C1- 19 913 380

## Beschreibung

### Stand der Technik

Die Erfindung geht aus von einer pneumatischen Schaltventileinrichtung für Anlagen zum willkürlichen Heben und Senken des Fahrzeugaufbaus von luftgefederten Fahrzeugen, gemäß dem Oberbegriff von Anspruch 1.

Luftgefederte Fahrzeuge mit Niveauregelung weisen üblicherweise einen Druckluftvorrat, ein Niveauregelventil zur automatischen lastabhängigen Einstellung des Fahrzeugniveaus, mindestens einer Fahrzeugachse zugeordnete Luftfederbälge sowie eine Schaltventileinrichtung zur manuellen Niveaueinstellung des Fahrzeugaufbaus unter Umgehung des Niveauregelventils auf. Eine solche Schaltventileinrichtung weist in der Regel ein in eine Leitungsverbindung des Niveauregelventils mit den Luftfederbälgen eingebautes Sperrventil, ein Einlassventil sowie ein Auslassventil zum manuellen Be- und Entlüften der Luftfederbälge auf.

Mit anderen Worten ist bei Luftfederungseinrichtungen mit Luftfederbälgen zusätzlich zum Niveauregelventil, welches das Niveau einer Anhängerplattform oder eines Anhängerrahmens in bekannter Weise auf einen konstanten Wert einregelt, eine manuell betätigbare Schaltventileinrichtung vorgesehen, mittels der von einer Bedienperson unter Umgehung des Niveauregelventils eine gewünschte Niveaulage der Anhängerplattform bzw. des Fahrzeugsaufbaus eingestellt werden kann. Dazu wird die Niveauregelventileinheit manuell in die Stellungen "Heben", "Senken" oder "Stop" gestellt. Dazu weist die Schaltventileinrichtung ein Bedienelement meist in Form eines Handbetätigungsmittels auf, womit z.B. eine für ein Beladen des Fahrzeugs an einer Laderampe gewünschte Niveaulage eingestellt werden kann. Weiterhin muss eine Stellung "Fahrt" vorhanden sein, in welcher das Niveauregelventil wieder wirksam wird.

Eine solche Schaltventileinrichtung ist beispielsweise in der DE 41 20 824 C1 beschrieben. Die bekannte Schaltventileinrichtung weist eine durch Druckbeaufschlagung eines Steuerkolbens axial zwischen den Stellungen Stop und Fahrt verschiebbare Schaltwelle auf, die aus der Stellung Stop durch Verdrehen das Einlassventil zum Heben oder das Auslassventil zum Senken betätigt. Das Einlassventil, das Auslassventil und das Sperrventil sind in unterschiedlichen axialen Ebenen der Schaltwelle angeordnet. Durch Beaufschlagung des Steuerkolbens mit Druckluft kann die Schaltventileinrichtung in die Stellung Fahrt überführt werden. Die Federanordnung führt das Bedienelement in Form eines Handhebels in die Stellung Stop zurück.

Eine gattungsgemäße Schalteinrichtung ist in der nachveröffentlichten WO 2007/093251 A offenbart.

Der vorliegenden Erfindung liegt demgegenüber die Aufgabe zugrunde, ein Schaltventil der eingangs erwähnten Art derart weiter zu entwickeln, dass es einfach aufgebaut und kostengünstig zu fertigen ist.

Diese Aufgabe wird erfindungsgemäß durch die Merkmale von Anspruch 1 gelöst.

### Offenbarung der Erfindung

Zunächst ist wie in der oben genannten WO 2007/093251 A vorgesehen, dass die Federeinrichtung das Bedienelement nach dem Loslassen in die Stellung Fahrt rückführt, eine das Bedienelement mechanisch verriegelnde Stellungssicherungseinrichtung vorgesehen ist, welche im verriegelten Zustand eine durch Federkraft der Federeinrichtung bedingte Rückführung des Bedienelements in die Stellung Fahrt verhindert, dies im entriegelten Zustand jedoch zulässt, aber stets ein manuelles Verstellen des Bedienelements ermöglicht, und die Stellungssicherungseinrichtung durch ein elektrisches Signal vom verriegelten Zustand in den entriegelten Zustand stellbar ist.

Dann geschieht die Rückstellung des Bedienhebels in die Stellung Fahrt elektrisch-mechanisch. Demzufolge kann eine aufwändige pneumatische Rückstellung mit Steuerkolben und hierzu notwendiger pneumatischer Verrohrung entfallen, wodurch sich ein einfacher, kostengünstigerer Aufbau ergibt.

Denn die Bedienperson spannt durch die Betätigung des Bedienelements aus der Stellung Fahrt heraus die Federeinrichtung. Ein mechanischer Widerstand, insbesondere eine Rasteinrichtung, verhindert, dass sich das beispielsweise in der Stellung Senken befindliche Bedienelement selbsttätig wieder in die Stellung Fahrt zurückgelangt. Dieser mechanische Widerstand muss groß genug sein, um eine selbsttätige Rückführung des Bedienelements in die Stellung Fahrt durch die Federkräfte der Federeinrichtung zu verhindern, andererseits muss die Bedienperson den Bedienhebel jederzeit gegen den mechanischen Widerstand verstellen können. Dieser mechanische Widerstand wird durch das elektrische Signal reduziert bzw. abgeschaltet, so dass die Federeinrichtung das Bedienelement wieder in die Stellung Fahrt zurückführen kann.

Gemäß der Erfindung ist vorgesehen, dass durch das Bedienelement ein mit wenigstens einem Luftfederbalg in Verbindung stehender Balgluftkanal zusammen mit einem Verschlusselement relativ zu Mündungen von in einem Block ausgebildeten Luftkanälen, welche entweder mit einem Niveauregelventil, einem Druckluftvorrat oder mit einer Entlüftung in Verbindung stehen, in eine Luftströmung zwischen dem Balgluftkanal und wahlweise jeweils einem der Luftkanäle gestattende und zugleich die Mündungen der anderen Luftkanäle durch das Verschlusselement verschließende Stellungen bringbar ist, wobei das Bedienelement zusammen mit dem Balgluftkanal und dem Verschlusselement in Bezug auf eine Schwenkachse rotatorisch betätigt und die Mündungen der Luftkanäle jeweils am Umfang einer gedachten Kreislinie um diese Schwenkachse angeordnet sind.

Dadurch ergibt sich ein besonders einfacher Aufbau. Denn dann werden die Ventilschaltfunktionen Heben, Senken, Fahrt und Stop lediglich durch eine Überdeckung oder Nicht-Überdeckung das Balgluftkanals mit den Mündungen der Luftkanäle in dem Block realisiert, wobei eine Überdeckung des Balgluftkanals mit einem der Luftkanäle die Ausführung einer bestimmten Schaltfunktion, z.B. Heben und gleichzeitiges Sperren der anderen Luftkanäle und damit auch der anderen Funktionen bedeutet.

Die Stellungssicherungseinrichtung beinhaltet eine Rasteinrichtung, durch welche die Stellung des Bedienelements gegenüber einem ruhenden Block verrastbar ist.

Die Rasteinrichtung beinhaltet wenigstens einen mit zumindest die Stellungen Fahrt, Heben, Senken und Stop des Bedienhebels repräsentierenden Rastöffnungen eines Rastkörpers in Flucht bringbaren und in diese zumindest teilweise einrastbaren Bolzen beinhalten, welcher in Richtung auf die Rastöffnungen federbelastet ist.

Bevorzugt beinhaltet diese Rasteinrichtung weiterhin einen von dem elektrischen Signal direkt oder indirekt gesteuerten elektrischen Aktuator, wobei dieser elektrische Aktuator bevorzugt in dem ruhenden Block aufgenommen ist.

Dann kann der wenigstens eine Bolzen gegen die Federkraft einer Federeinrichtung durch den elektrischen Aktuator wie einen Elektromagneten, ein Piezoventil, ein beheizbares Bimetall oder einen Elektromotor betätigt werden, um die Verrastung aufzuheben.

Insbesondere sind die Funktionen eines Einlassventils zum Heben, eines Auslassventils zum Senken sowie eines Sperrventils für die Fahrt durch einander einerseits dicht kontaktierende, andererseits gegeneinander linear, rotatorisch oder in beliebiger Weise verschiebbare, vorzugsweise plattenförmige Körper realisiert, in welchen die Funktionen repräsentierende Mündungen von Luftkanälen ausgebildet sind.

Eine solche Kinematik wird durch einfache Mittel realisiert dadurch, dass die Rastöffnungen im Rastkörper sowie die Mündungen der Luftkanäle jeweils am Umfang einer gedachten Kreislinie um die Schwenkachse angeordnet werden.

Das Verschlusselement besteht einem mit dem Bedienelement um die Schwenkachse verschwenkbaren Ringkörper, mit einer Durchgangsöffnung, in welche der Balgluftkanal mündet. Nicht zuletzt sind die Mündungen der Luftkanäle auf einem vom Block getragenen Ringkörper angeordnet, bevorzugt auf einer gedachten Kreislinie um die Schwenkachse, welche sich mit der gedachten Kreisbahn überdeckt, auf welcher sich die Durchgangsöffnung im Ringkörper für den Balgluftkanal beim rotatorischen Betätigen des Bedienelements bewegt.

Der Rastkörper beinhaltet einen mit dem Bedienelement um die Schwenkachse mitverschwenkten Ringkörper, in welchem die Rastöffnungen ausgebildet sind.

Wenn dann der Ringkörper mit der Durchgangsöffnung für den Balgluftkanal und der Ringkörper mit den Rastöffnungen jeweils Ringsegmente bilden, die im wesentlichen in einer Ebene senkrecht zur Schwenkachse angeordnet sind, ergibt sich eine sehr kompakte Schaltventileinrichtung.

Genaueres geht aus der folgenden Beschreibung eines Ausführungsbeispiels hervor.

### Zeichnungen

Nachstehend ist ein Ausführungsbeispiel der Erfindung in der Zeichnung dargestellt und in der nachfolgenden Beschreibung näher erläutert. In der Zeichnung zeigt
- Fig. 1: eine teilweise aufgeschnittene Seitenansicht einer pneumatischen Schalteinrichtung gemäß einer bevorzugten Ausführungsform der Er- findung;
- Fig. 2: eine Draufsicht auf die Schalteinrichtung von Fig. 1;

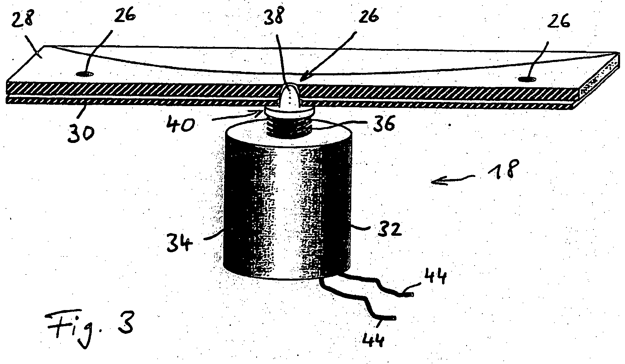

- Fig. 3: eine perspektivische Ansicht einer Rasteinrichtung der Schaltventil- einrichtung von Fig. 1;
- Fig. 4: eine Draufsicht auf einen Block der Schaltventileinrichtung von Fig. 1 mit in einem Ringkörper des Blocks ausgebildeten Mündungen von Luftkanälen;
- Fig. 5: eine Draufsicht auf einen Ringkörper mit einer Durchgangsöffnung für einen Balgluftkanal;
- Fig. 6: eine Querschnittsdarstellung des mit dem Ringkörper von Fig. 5 zu- sammenwirkenden Ringkörpers von Fig. 4;
- Fig. 7: eine Draufsicht des mit dem Ringkörper von Fig. 4 zusammenwirken- den Ringkörpers gemäß Fig. 5 in der Stellung Fahren;
- Fig. 8: eine Draufsicht des mit dem Ringkörper von Fig. 4 zusammenwirken- den Ringkörpers von Fig. 5 in der Stellung Heben;
- Fig. 9: eine Draufsicht des mit dem Ringkörper von Fig. 4 zusammenwirken- den Ringkörpers gemäß Fig. 5 in der Stellung Stop;
- Fig. 10: eine Draufsicht des mit dem Ringkörper von Fig. 4 zusammenwirken- den Ringkörpers gemäß Fig.5 in der Stellung Senken;
- Fig. 11: eine Draufsicht des mit dem Ringkörper von Fig. 4 zusammenwirken- den Ringkörpers gemäß Fig. 5 in der Stellung Stop.

### Beschreibung des Ausführungsbeispiels

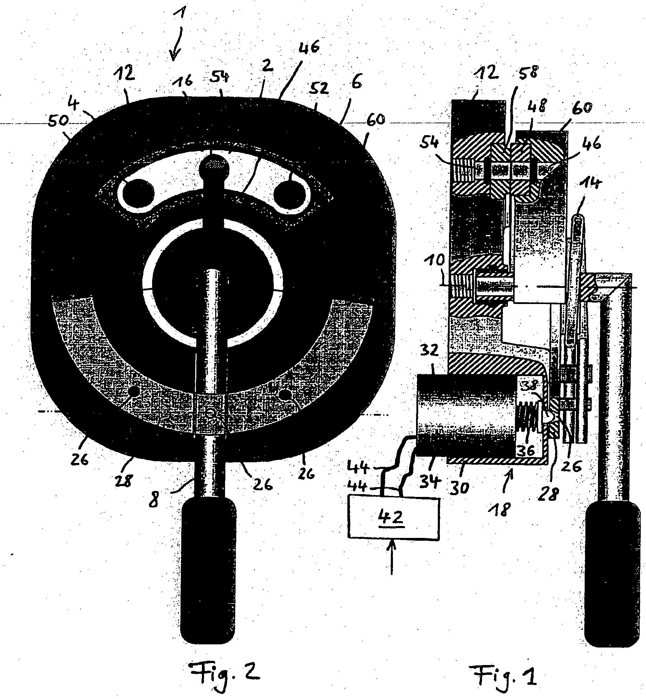

In Fig. 1 ist eine teilweise aufgeschnittene Seitenansicht einer pneumatischen Schalteinrichtung 1 gemäß einer bevorzugten Ausführungsform der Erfindung gezeigt, welche ein Teil einer Niveauregelung eines luftgefederten Fahrzeugs ist. Eine solche Niveauregelung weist üblicherweise einen Druckluftvorrat, ein Niveauregelventil zur automatischen lastabhängigen Einstellung des Fahrzeugniveaus, mindestens einer Fahrzeugachse zugeordnete Luftfederbälge sowie die Schaltventileinrichtung 1 zur manuellen Niveaueinstellung des Fahrzeugaufbaus unter Umgehung des Niveauregelventils auf.

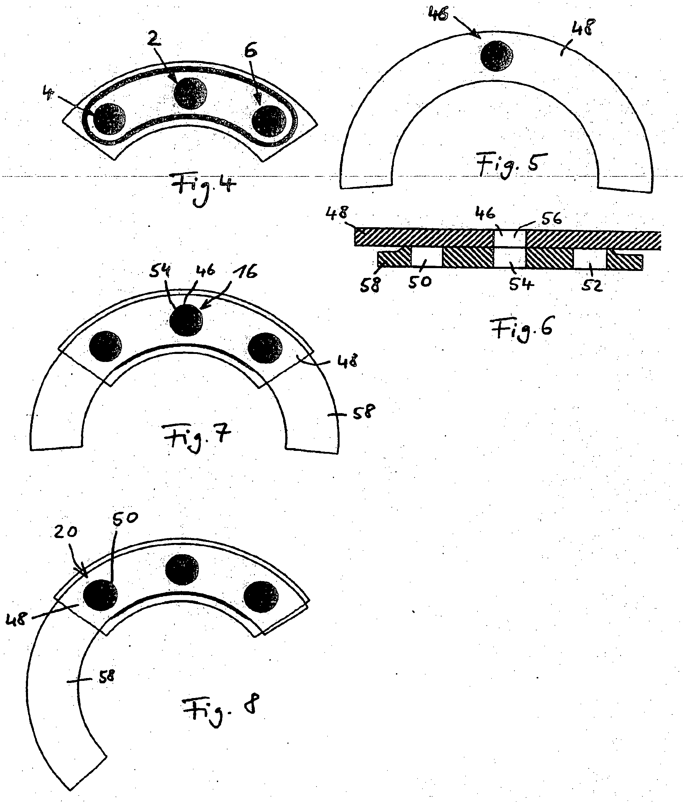

Eine solche Schaltventileinrichtung 1 umfasst ein in eine Leitungsverbindung des Niveauregelventils mit den Luftfederbälgen eingebautes Sperrventil 2, ein Einlassventil 4 sowie ein Auslassventil 6 zum manuellen Be- und Entlüften der Luftfederbälge auf, wie am besten in Fig. 2 zu sehen ist. Weiterhin ist ein mechanisches Bedienelement für die Schaltventileinrichtung 1 vorhanden, hier in Form eines um 90 Grad gekröpften Bedienhebels 8, dessen Fußteil als Schwenkachse 10 in einem Block 12 drehgelagert ist, der in die Stellungen Heben, Senken, Fahrt und Stop (siehe Fig. 7 bis Fig. 11) verschwenkbar ist. Darüber hinaus wirkt auf den Bedienhebel 8 eine einerseits am Bedienhebel 8 und andererseits am Block 12 angreifende Federeinrichtung 14, welche in einer vorzugsweise mittigen und in Fig. 2 gezeigten Drehstellung Neutral oder Fahrt 16 entspannt ist und durch Schwenken nach beiden Richtungen von der Stellung Neutral oder Fahrt 16 aus, gespannt wird, so dass der Bedienhebel nach dem Loslassen in die Stellung Neutral oder Fahrt 16 zurückschwenkt.

Nicht zuletzt ist eine am Bedienhebel 8 direkt oder indirekt mechanisch angreifende Stellungssicherungseinrichtung 18 derart vorgesehen, dass sie im verriegelten Zustand eine durch die Federkraft der Federeinrichtung 14 bedingte Rückführung des Bedienhebels 8 in die Stellung Neutral oder Fahrt 16 verhindert, dies im entriegelten Zustand jedoch zulässt, aber stets ein manuelles Verstellen des Bedienhebels 8 ermöglicht. Die Stellungssicherungseinrichtung 18 ist durch ein elektrisches Signal vom verriegelten Zustand in den entriegelten Zustand schaltbar.

Die Stellungssicherungseinrichtung 18 beinhaltet einen mechanischen Widerstand, insbesondere in Form einer Rasteinrichtung, welche verhindert, dass sich der beispielsweise in der Stellung Stop befindliche Bedienhebel 8 selbsttätig wieder in die Stellung Neutral oder Fahrt 16 zurückgelangt. Dieser mechanische Widerstand muss groß genug sein, um eine Rückführung des Bedienhebels 8 in die Stellung Fahrt 16 durch die Federkräfte der Federeinrichtung 14 zu verhindern, andererseits muss eine Bedienperson den Bedienhebel 8 jederzeit gegen den mechanischen Widerstand verstellen können. Dieser mechanische Widerstand wird durch ein elektrisches Signal reduziert oder weggeschaltet, welches abhängig vom Erreichen einer kritischen Geschwindigkeit oder von einer Bremsbetätigung des Fahrzeugs, insbesondere von einem Antiblockiersystem (ABS) des Fahrzeugs erzeugt wird, so dass die Federeinrichtung 14 den Bedienhebel 8 wieder in die Stellung Fahrt 16 zurückführen kann.

Durch die Rasteinrichtung 18 ist die Stellung des Bedienhebels 8 gegenüber dem ruhenden Block 12 verrastbar. Diese Rasteinrichtung 18 beinhaltet wenigstens einen mit zumindest die Stellungen Fahrt 16, Heben 20, Senken 22 oder Stop des Bedienhebels 8 repräsentierenden Rastöffnungen 26 eines Rastkörpers 28 in Flucht bringbaren und in diese zumindest teilweise einrastbaren Bolzen 38, welcher in Richtung auf die Rastöffnungen 26 federbelastet ist. Besonders bevorzugt wird der Rastkörper durch einen mit dem Bedienhebel 8 um die Schwenkachse 10 mitverschwenkten Ringkörper 28 gebildet, in welchem die Rastöffnungen 26 bevorzugt auf einer gedachten Kreislinie um die Schwenksachse 10 äquidistant ausgebildet sind.

Bevorzugt beinhaltet die Stellungssicherungseinrichtung auch einen in einem Gehäuse 30 des Blocks 12 aufgenommenen elektrischen Aktuator 32, abhängig von dem elektrischen Signal den mit einem Elektromagneten 34 zusammenwirkenden, in eine ausgefahrene Stellung durch eine Feder 36 belasteten Bolzen 38 steuert. In der ausgefahrenen Stellung durchragt der Bolzen 38 eine Durchgangsöffnung 40 des Gehäuses 30 des Blocks 12 und steht ein Stück weit über das Gehäuse 30 nach außen vor, um in eine der Rastöffnungen 26 hineinragen zu können.

Anstatt durch einen Elektromagneten 34 könnte der Bolzen 38 der Rasteinrichtung 18 auch durch einen beliebigen, durch ein elektrisches Signal betätigbaren Aktuator wie etwa ein Piezoventil, ein beheizbares Bimetall oder einen Elektromotor gesteuert werden.

Das elektrische Signal wird vorzugsweise vom ABS des Fahrzeugs einer Steuereinrichtung 42 für den elektrischen Aktuator 32 zugeführt, welches in Abhängigkeit davon die Steuersignale für den Aktuator 32 erzeugt. Im Ausgangszustand, d.h. bei in Fahrt befindlichem Fahrzeug muss sich der Bedienhebel 8 in der mittigen Stellung Neutral oder Fahrt 16 befinden, so dass das dann vom ABS bei einer Bremsung erzeugte elektrische Signal dafür sorgt, dass der Bolzen 38 in die eingefahrene Stellung zurückfährt. Dazu wird der Bolzen 38 nach Erzeugung des elektrischen Signals durch das ABS, welches bevorzugt ein Impulssignal ist, durch die Magnetkräfte des dann durch die Steuereinrichtung 42 bestromten Elektromagneten 34 gegen die Wirkung der Federkraft der Feder 36 in die eingefahrene Stellung zurückgezogen. Dazu ist der Elektromagnet 34 durch elektrische Kabel 44 mit der Steuereinrichtung 42 verbunden, welche basierend auf dem Impulssignal des ABS eine Bestromung des Elektromagneten 34 über einen Zeitraum veranlasst, der ausreicht, um den Bedienhebel 8 durch Zurückziehen des Bolzens 38 zu entrasten, so dass der Bedienhebel 8 aus einer der Stellungen Heben 20, Senken 22 oder Stop 24 in die Stellung Neutral oder Fahrt 16 zurückschwenken kann, wie anhand von Fig. 1 und Fig. 2 leicht vorstellbar ist.

In der Schaltventileinrichtung 1 sind das Sperrventil 2, das Einlassventil 4 sowie das Auslassventil 6 integriert und beinhalten Mündungen von Luftkanälen 50, 52 und 54, welche mit dem Druckluftvorrat (Heben), einer Entlüftung (Senken) bzw. mit dem Niveauregelventil (Fahrt) in leitender Verbindung stehen (Fig. 6). Bevorzugt ist der Bedienhebel 8 zusammen mit einem mit wenigstens einem Luftfederbalg in Verbindung stehenden Balgluftkanal 46 und einem Verschlusselement 48 in einer Ebene senkrecht zur Schwenkachse 10 um diese auf einer Kreisbahn rotatorisch verschwenkbar. Demgegenüber sind die Rastöffnungen 26 sowie die Mündungen der Luftkanäle 50, 52, 54 ebenfalls jeweils am Umfang einer gedachten Kreislinie um diese Schwenkachse 10 angeordnet.

Das Verschlusselement kann dann in einem mit dem Bedienhebel 8 um die Schwenkachse 10 verschwenkbaren Ringsegment 48 bestehen, mit einer vorzugsweise mittigen Durchgangsöffnung 56, in welche der Balgluftkanal 46 mündet, wie Fig. 5 und Fig. 6 veranschaulichen. Nicht zuletzt liegen die Mündungen der Luftkanäle 50, 52 und 54 bevorzugt auf einem in Fig. 6 im Schnitt gezeigten und im Block 12 gehaltenen Ringsegment 58 äquidistant auf einer gedachten Kreislinie um die Schwenkachse 10, welche sich mit der Kreisbahn überdeckt, auf welcher sich die Durchgangsöffnung 56 für den Balgluftkanal 46 in dem Ringsegment 48 beim rotatorischen Betätigen des Bedienhebels 8 bewegt.

Durch eine rotatorische Betätigung des Bedienhebels 8 ist dann der mit dem wenigstens einen Luftfederbalg in Verbindung stehende Balgluftkanal 46 zusammen mit dem Verschlusselement 48 in eine Luftströmung zwischen dem Balgluftkanal 46 und wahlweise jeweils einem der Luftkanäle 50, 52 oder 54 gestattende und zugleich die Mündungen der anderen Luftkanäle 50, 52 oder 54 durch das Verschlusselement 48 verschließende Stellungen bringbar, wie am besten Fig.6 veranschaulicht. Denn dann werden die Ventilschaltfunktionen Heben, Senken, Fahrt und Stopp lediglich durch eine Überdeckung oder Nicht-Überdeckung das Balgluftkanals 46 mit den Mündungen der Luftkanäle 50, 52 oder 54 in dem Block 12 realisiert, wobei eine Überdeckung des Balgluftkanals 46 mit einem der Luftkanäle 50, 52 oder 54 die Ausführung einer bestimmten Schaltfunktion, z.B. Heben und gleichzeitiges Sperren der anderen Luftkanäle 50, 52 oder 54 und damit auch der anderen Funktionen bedeutet.

Dann wird die Sperrfunktion des Sperrventils 2 dadurch erzielt, dass der Rings körper 48 in eine von einer Flucht des Balgluftkanals 46 mit dem Luftkanal 55 abweichende Stellung verdreht wird. In analoger Weise lässt dieses Sperrventil 2 eine Luftströmung vom Niveauregelventil zu den Luftfederbälgen zu, wenn die in Fig. 1, Fig. 2, Fig. 6 und Fig. 7 gezeigte Fluchtstellung zwischen dem Balgluftkanal 46 und dem Luftkanal 54 erreicht ist.

Genauso wird Druckluft aus dem Druckluftvorrat über den Luftkanal 50 und den Balgluftkanal 46 zu den Luftfederbälgen in der in Fig. 8 gezeigten Funktion Heben geleitet, wenn sich das Einlassventil 4 durch Überdeckung des Balgtuftkanals 46 mit dem Luftkanal 50 in Öffnungsstellung befindet.

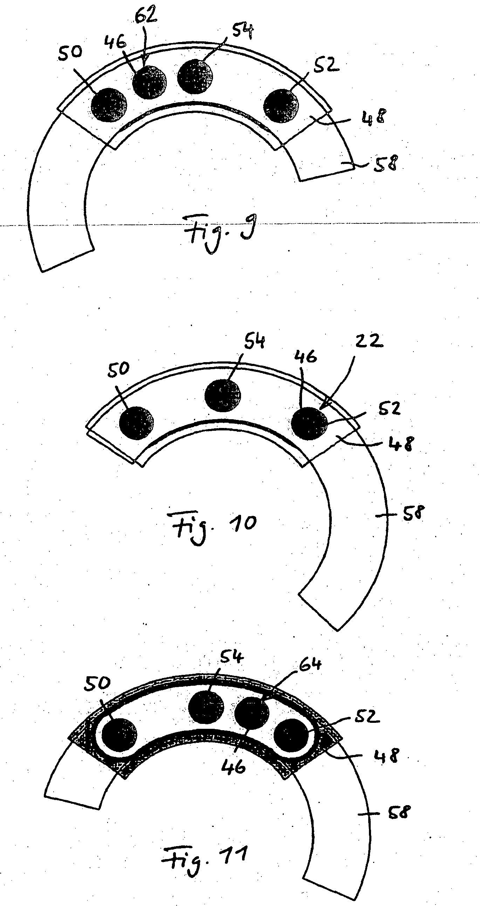

Wird demgegenüber der Ringkörper 48 mit dem Balgluftkanal 46 in die in Fig. 10 gezeigte Stellung Senken durch den Bedienhebel 8 verdreht, so ist das Einlassventil durch den Ringkörper 48 verschlossen, dagegen das Auslassventil 6 geöffnet, weil der Balgluftkanal 46 mit dem Luftkanal 52 fluchtet, welcher zur Entlüftung führt.

Die Funktionen des Einlassventils 4, des Auslassventils 6 sowie des Sperrventils 2 werden folglich durch einander einerseits dicht kontaktierende, andererseits gegeneinander verschiebbare, vorzugsweise plattenförmige Körper 48, 58 realisiert, in welchen die Funktionen repräsentierende Mündeungen von Luftkanälen ausgebildet sind.

In Fig. 6 ist beispielhaft die Stellung Neutral oder Fahrt 16 der beiden aus Dichtigkeitsgründen vorzugsweise im wesentlichen spaltlos übereinander angeordneten Ringsegmente 48 und 58 dargestellt, wobei die Mündung des Balgluftkanals 46 mit der Mündung des zum Niveauregelventil führenden Luftkanals 54 im Block 12 in Flucht steht, während die Mündungen der Luftkanäle 50, 52, die zum Druckluftvorrat bzw. zur Entlüftung führen, durch das das Verschlusselement bildende Ringsegment 48 verschlossen werden. In diesem Fall werden die Luftfederbälge über den Balgluftkanal 46 mit dem vom Niveauregelventil stammenden Luftstrom versorgt, um das Niveau des Fahrzeugaufbaus beladungsunabhängig konstant zu halten.

Bevorzugt sind das Ringsegment 48 mit der Durchgangsöffnung 56 für den Balgluftkanal 46 und das Ringsegment 28 mit den Rastöffnungen 26 im wesentlichen in einer Ebene senkrecht zur Schwenkachse 10 angeordnet und bilden zusammen einen Winkel von kleiner oder gleich 360 Grad. Die Ringsegmente 48 und 58 bestehen vorzugsweise aus einer Keramik und sind als Einsätze im Block 12 bzw. in einem vorzugsweise halbkreisförmigen-Schwenkkörper 60 gehalten, der mit dem Bedienhebel 8 verbunden ist.

Wie insbesondere aus den Fig. 9 und Fig. 11 hervorgeht, ist zwischen den Stellungen Senken 22 und Neutral bzw. Fahrt 16 und den Stellungen Heben 20 und Neutral bzw. Fahrt 16 jeweils eine Stellung Stop 62, 64 vorhanden, in welchen der Bedienhebel 8 durch die Rasteinrichtung 18 verrastet werden kann. In diesen Stellungen Stop 62, 64 nimmt der Bedienhebel 8 mit dem Ringsegment 48 und der Durchgangsöffnung 56 für den Balgluftkanal 46 eine Schwenklage ein, in welcher die Mündung des Balgluftkanals 46 mit keiner der Mündungen der Luftkanäle 50, 52 oder 54 fluchtet, so dass sowohl der Balgluftkanal 46 als auch die Luftkanäle 50, 52 und 54 verschlossen sind. Damit unterbrechen die Stellungen Stop 62 und 64 eine weitere Luftzufuhr in den Balgluftkanal 46 beim Heben bzw. eine weitere Luftabfuhr aus dem Balgluftkanal 46 beim Senken durch ein Sperren der Luftwege, so dass das zuletzt eingestellte Niveau des Fahrzeugaufbaus beibehalten wird.

Ein weiteres Beispiel für eine rotatorische Kinematik der Schaltventileinrichtung1 ist eine Radial-Drehschieberventileinrichtung, welche ebenfalls im Rahmen der Erfindung liegt.

### Bezugszeichenliste

- 1: Schalteinrichtung
- 2: Sperrventil
- 4: Einlassventil
- 6: Auslassventil
- 8: Bedienhebel
- 10: Schwenkachse
- 12: Block
- 14: Federeinrichtung
- 16: Stellung Fahrt
- 18: Stellungssicherungseinrichtung
- 20: Heben
- 22: Senken
- 26: Rastöffnungen
- 28: Ringkörper
- 30: Gehäuse
- 32: Aktuator
- 34: Elektromagnet
- 36: Feder
- 38: Bolzen
- 40: Durchgangsöffnung
- 42: Steuereinrichtung
- 44: Kabel
- 46: Balgluftkanal
- 48: Verschlusselement (Ringkörper)
- 50: Luftkanal
- 52: Luftkanal
- 54: Luftkanal
- 56: Durchgangsöffnung
- 58: Ringkörper
- 60: Schwenkkörper
- 62: Stellung Stop
- 64: Stellung Stop

## Patentansprüche

1. Pneumatische Schaltventileinrichtung (1) für Anlagen zum willkürlichen Heben und Senken des Fahrzeugaufbaus von luftgefederten Fahrzeugen, mit einer mindestens ein mechanisches Bedienelement (8) aufweisenden Steuereinrichtung (2, 4, 6) für die Stellungen Heben (20), Senken (22), Fahrt (16) und Stop (62, 64) sowie mit einer Federeinrichtung (14) zum Rückführen des Bedienelements (8) nach dem Loslassen, wobei
a) die Federeinrichtung (14) das Bedienelement (8) nach dem Loslassen in die Stellung Fahrt (16) rückführt,
b) eine das Bedienelement (8) mechanisch verriegelnde Stellungssicherungseinrichtung (18) vorgesehen ist, welche im verriegelten Zustand eine durch Federkraft der Federeinrichtung (14) bedingte Rückführung des Bedienelements (8) in die Stellung Fahrt (16) verhindert, dies im entriegelten Zustand jedoch zulässt, aber stets ein manuelles Verstellen des Bedienelements (8) ermöglicht,
c) die Stellungssicherungseinrichtung (18) durch ein elektrisches Signal vom verriegelten Zustand in den entriegelten Zustand stellbar ist, und wobei
d) die Stellungssicherungseinrichtung eine Rasteinrichtung (18) beinhaltet, durch welche die Stellung des Bedienelements (8) gegenüber einem ruhenden Block (12) verrastbar ist, und wobei
e) die Rasteinrichtung (18) wenigstens einen mit zumindest die Stellungen Fahrt (16), Heben (20), Senken (22) und Stop (62, 64) des Bedienhebels (8) repräsentierenden Rastöffnungen (26) eines Rastkörpers (28) in Flucht bringbaren und in diese zumindest teilweise einrastbaren Bolzen (38) beinhaltet, welcher in Richtung auf die Rastöffnungen (26) federbelastet ist,
**dadurch gekennzeichnet, dass**
f) durch das Bedienelement (8) ein mit wenigstens einem Luftfederbalg in Verbindung stehender Balgluftkanal (46) zusammen mit einem Verschlusselement (48) relativ zu Mündungen von in dem Block (12) ausgebildeten Luftkanälen (50, 52, 54), welche entweder mit einem Niveauregelventil, einem Druckluftvorrat oder mit einer Entlüftung in Verbindung stehen, in eine Luftströmung zwischen dem Balgluftkanal (46) und wahlweise jeweils einem der Luftkanäle (50, 52, 54) gestattende und zugleich die Mündungen der anderen Luftkanäle (50, 52, 54) durch das Verschlusselement (48) verschließende Stellunggen bringbar ist, wobei
g) das Bedienelement (8) zusammen mit dem Balgluftkanal (46) und dem Verschlusselement (48) in Bezug auf eine Schwenkachse (10) rotatorisch betätigt und die Rastöffnungen (26) im Rastkörper (28) sowie die Mündungen der Luftkanäle (50, 52, 54) jeweils am Umfang einer gedachten Kreislinie um diese Schwenkachse (10) angeordnet sind, wobei
h) das Verschlusselement (48) durch einen mit dem Bedienelement (8) um die Schwenkachse (10) verschwenkbaren Ringkörper gebildet wird, mit einer Durchgangsöffnung (56), in welche der Balgluftkanal (46) mündet.

2. Pneumatische Schaltventileinrichtung nach Anspruch 1, **dadurch gekennzeichnet, dass** die Mündungen der Luftkanäle (50, 52, 54) auf einer gedachten Kreislinie um die Schwenkachse (10) liegen, welche sich mit der gedachten Kreisbahn überdeckt, auf welcher sich die Durchgangsöffnung (56) im Ringkörper (48) für den Balgluftkanal (46) beim rotatorischen Betätigen des Bedienelements (8) bewegt.

3. Pneumatische Schaltventileinrichtung nach Anspruch 1 oder 2, **dadurch gekennzeichnet, dass** der Rastkörper (28) einen mit dem Bedienelement (8) um die Schwenkachse (10) mitverschwenkten Ringkörper beinhaltet, in welchem die Rastöffnungen (26) ausgebildet sind.

4. Pneumatische Schaltventileinrichtung nach Anspruch 3, **dadurch gekennzeichnet, dass** der Ringkörper (48) mit der Durchgangsöffnung (56) für den Balgluftkanal (46) und der Ringkörper (28) mit den Rastöffnungen (26) jeweils Ringsegmente bilden, die im Wesentlichen in einer Ebene senkrecht zur Schwenkachse (10) angeordnet sind.

5. Pneumatische Schaltventileinrichtung nach wenigstens einem der Ansprüche 1 bis 4, **dadurch gekennzeichnet, dass** die Funktionen eines Einlassventils (4) zum Heben, eines Auslassventils (6) zum Senken sowie eines Sperrventils (2) für die Fahrt durch einander einerseits dicht kontaktierende, andererseits gegeneinander verschiebbare, vorzugsweise plattenförmige Körper (48, 58) realisiert sind, in welchen die Funktionen repräsentierende Mündungen von Luftkanälen (46, 50, 52, 54) ausgebildet sind.

## Claims

1. Pneumatic control valve device (1) for systems for arbitrarily lifting and lowering the vehicle body of air-suspended vehicles, with a control device (2, 4, 6) having at least one mechanical control element (8) for the positions lift (20), lower (22), drive (16) and stop (62, 64), and with a spring device (14) for returning the control element (8) after it has been released, wherein
a) the spring device (14) returns the control element (8) after it has been released into the drive position (16),
b) a position securing device (18) is provided, said position securing device mechanically locking the control element (8), said position securing device, in the locked state, preventing the control element (8) from returning under the spring force of the spring device (14) into the drive position (16), but permitting this in the unlocked state, however always permitting the control element (8) to be manually adjusted,
c) the position securing device (18) can be changed from the locked state into the unlocked state by an electric signal, and wherein
d) the position securing device contains a latching device (18) by means of which the position of the control element (8) can be latched in relation to a stationary unit (12), and wherein
e) the latching device (18) contains at least one bolt (38) which can be brought into alignment with latching openings (26) in a latching body (28), said latching openings representing at least the positions drive (16), lift (20), lower (22) and stop (62, 64) of the control lever (8), and can be at least partially latched into said latching openings (28) and is spring-loaded in the direction thereof,
**characterized in that**
f) by means of the control element (8), a bellows air duct (46) connected to at least one air spring bellows can be brought together with a closure element (48) relative to mouths of air ducts (50, 52, 54), which are formed in a unit (12) and are connected either to a level control valve, a compressed air store or to an air discharging means, into positions permitting an air flow between the bellows air duct (46) and a choice of one of the air ducts (50, 52, 54) and at the same time closing the mouths of the other air ducts (50, 52, 54) by means of the closure element (48), wherein
g) the control element (8) is actuated together with the bellows air duct (46) and the closure element (48) in a rotational manner with respect to a pivot axis (10), and the latching openings (26) in the latching body (28) and the mouths of the air ducts (50, 52, 54) are each arranged on the circumference of an imaginary circular line about said pivot axis (10), wherein
h) the closure element (48) is formed by an annular body which can be pivoted with the control element (8) about the pivot axis (10) and has a passage opening (56) into which the bellows air duct (46) leads.

2. Pneumatic control valve device according to Claim 1, **characterized in that** the mouths of the air ducts (50, 52, 54) lie on an imaginary circular line about the pivot axis (10), which circular line coincides with the imaginary circular path along which the passage opening (56) moves in the annular body (48) for the bellows air duct (46) during the rotational actuation of the control element (8).

3. Pneumatic control valve device according to Claim 1 or 2, **characterized in that** the latching body (28) contains an annular body which can be pivoted together with the control element (8) about the pivot axis (10) and in which the latching openings (26) are formed.

4. Pneumatic control valve device according to Claim 3, **characterized in that** the annular body (48) with the passage opening (56) for the bellows air duct (46) and the annular body (28) with the latching openings (26) each form annular segments which are arranged substantially in a plane perpendicular to the pivot axis (10).

5. Pneumatic control valve device according to at least one of Claims 1 to 4, **characterized in that** the functions of an inlet valve (4) for the lifting, an outlet valve (6) for the lowering and a shut-off valve (2) for the drive are realized by preferably plate-like bodies (48, 58) which are tightly in contact with each other, but are displaceable in relation to each other and in which mouths of air ducts (46, 50, 52, 54), the mouths representing the functions, are formed.

## Revendications

1. Dispositif pneumatique à vanne de commande pour des installations pour lever et abaisser à volonté la carrosserie d'un véhicule à suspension pneumatique, comprenant un dispositif (2, 4, 6) de commande comportant au moins un élément (8) mécanique de service pour les positions levée (20), abaissée (22), marche (16) et arrêt (62, 64), ainsi qu'un dispositif (14) à ressort pour ramener l'élément (8) de service après la libération, dans lequel
a) le dispositif (14) à ressort ramène l'élément (8) de service dans la position marche (16) après la libération,
b) il est prévu un dispositif (18) de sécurité de position, qui verrouille mécaniquement l'élément (8) de service, lequel, dans l'état verrouillé, empêche un retour, provoqué par la force de ressort du dispositif (14) à ressort, de l'élément (8) de service dans la position marche (16), autorise toutefois cela dans la position déverrouillée, mais permet toujours un réglage manuel de l'élément (8) de service,
c) le dispositif (18) de sécurité de position peut par un signal électrique passer de l'état verrouillé à l'état verrouillé et dans lequel
d) le dispositif de sécurité de position comporte un dispositif (18) d'encliquetage, par lequel la position de l'élément (8) de service peut être encliquetée par rapport à un bloc (12) au repos et dans lequel
e) le dispositif (18) d'encliquetage comporte au moins un axe (38) qui peut être mis en alignement avec des ouvertures (26)d'un corps (28) d'encliquetage représentant les positions, marche (16), levée (20), abaissement (22) et arrêt (62, 64) du levier (8) de service, qui peut être encliqueté au moins en partie dans ces ouvertures et qui est soumis à l'action d'un ressort dans la direction allant vers les ouvertures (26) d'encliquetage,
**caractérisé en ce que**
f) par l'élément (6) de service un canal (46) d'air de soufflet en liaison avec au moins un soufflet de suspension pneumatique peut, ensemble avec un élément (48) de fermeture, être mis, par rapport à des embouchures de canaux (50, 52, 54) pour de l'air formées dans un bloc (12) et en liaison avec une vanne de réglage du niveau une réserve d'air comprimé ou une purge, dans une position autorisant un écoulement d'air entre le canal (46) d'air de soufflet et au choix respectivement l'un des canaux (50, 52, 54) pour de l'air et fermant en même temps les embouchures des autres canaux (50, 52, 54) par l'élément (48) de fermeture, dans lequel
g) l'élément de service ensemble avec le canal (46) d'air de soufflet et l'élément (48) de fermeture est actionné en rotation par rapport à un axe (10) de pivotement et les embouchures des canaux (50, 52, 54) pour de l'air sont disposées respectivement sur le pourtour d'un cercle imaginaire autour de cet axe (10) de pivotement, dans lequel
h) l'élément (48) de fermeture est formé par un corps annulaire qui peut pivoter par l'élément (8) de service autour de l'axe (10) de pivotement et qui a une ouverture (56) de passage, dans laquelle débouche le canal (46) d'air de soufflet.

2. Dispositif pneumatique à vanne de contrôle suivant la revendication 1, **caractérisé en ce que** les embouchures des canaux (50, 52, 54) pour de l'air sont sur un cercle imaginaire autour de l'axe (10) de pivotement, qui se recouvre avec la voie circulaire imaginaire sur laquelle se déplace l'ouverture (56) de passage dans le corps (48) annulaire pour le canal (46) d'air de soufflet lors de l'actionnement en rotation de l'élément (8) de service.

3. Dispositif pneumatique à vanne de contrôle suivant la revendication 1 ou 2, **caractérisé en ce que** le corps (28) d'encliquetage comporte un corps annulaire qui pivote avec l'élément (8) de service autour de l'axe (10) de pivotement et dans lequel sont formées les ouvertures (26) d'encliquetage.

4. Dispositif pneumatique à vanne de contrôle suivant la revendication 3, **caractérisé en ce que** le corps (48) annulaire forme avec l'ouverture (56) de passage pour le canal (46) d'air de soufflet et le corps (28) annulaire ayant les ouvertures (26) d'encliquetage respectivement des segments annulaires, qui sont disposés sensiblement dans un plan perpendiculaire à l'axe (10) de pivotement.

5. Dispositif pneumatique à vanne de contrôle suivant au moins l'une des revendications 1 à 4, **caractérisé en ce que** les fonctions d'une vanne (4) d'admission pour la levée, d'une vanne (6) de sortie pour l'abaissement, ainsi que d'une vanne (2) d'arrêt pour la marche sont réalisées par des pièces (48, 58), de préférence en forme de plaque, d'une part en contact étroit les unes avec les autres, mais pouvant d'autre part coulisser les unes par rapport aux autres, pièces dans lesquelles sont formées les embouchures, représentant les fonctions, des canaux (46, 50, 52, 54) pour de l'air.
